# EUROPÄISCHE PATENTANMELDUNG

(11) **EP 4 438 652 A1**
(43) Veröffentlichungstag der Anmeldung: **02.10.2024**
(21) Anmeldenummer: 23165501.0
(22) Anmeldetag: 30.03.2023
(51) Int. Cl.: C08G 63/78, C08G 63/16, C08K 5/13

(54) **VERFAHREN ZUR HERSTELLUNG VON ALIPHATISCHEN POLYESTERN**

(71) Anmelder: Fraunhofer-Gesellschaft zur Förderung der angewandten Forschung e.V., 80686 München (DE)
(72) Erfinder: PFAENDNER, Rudolf, 14476 Golm (DE); ZEHM, Dr. Daniel, 14476 Golm (DE); LIESKE, Dr. Antje, 14476 Golm (DE); GOMOLL, André, 14476 Golm (DE)
(74) Vertreter: Pfenning, Meinig & Partner mbB

(57) **Zusammenfassung**

Biobasierte sowie bioabbaubare Kunststoffe haben in den letzten Jahren zunehmend an Bedeutung gewonnen. Dazu zählt beispielsweise der aliphatische Polyester Polybutylensuccinat (PBS), der nach einem Polykondensationsverfahren in der Schmelze hergestellt wird. Dabei wird Bernsteinsäure mit 1,4-Butandiol im Temperaturbereich von 150°C bis 240°C zur Reaktion gebracht. Zusätzlich enthält die Reaktionsmischung einen Katalysator, um die Reaktion zum gewünschten Produkt zu beschleunigen. Für die Herstellung von PBS sind beispielsweise Ti-, Zr-, und Ge-Verbindungen vorteilhafte Katalysatoren, wie Jacquel, N., Freyermouth, F., Fenouillot, F., Rousseau, A., Pascault, J.P., Fuertes, P. and Saint-Loup, R. (2011), Synthesis and properties of poly(butylene succinate): Efficiency of different transesterification catalysts. J. Polym. Sci. A Polym. Chem., 49: 5301-5312 und die Patentschriften EP0747416B1, US7985566B2, EP2604640B1, WO2015/092073 andeuten.

## Beschreibung

Biobasierte sowie bioabbaubare Kunststoffe haben in den letzten Jahren zunehmend an Bedeutung gewonnen. Dazu zählt beispielsweise der aliphatische Polyester Polybutylensuccinat (PBS), der nach einem Polykondensationsverfahren in der Schmelze hergestellt wird. Dabei wird Bernsteinsäure mit 1,4-Butandiol im Temperaturbereich von 150°C bis 240°C zur Reaktion gebracht. Zusätzlich enthält die Reaktionsmischung einen Katalysator, um die Reaktion zum gewünschten Produkt zu beschleunigen. Für die Herstellung von PBS sind beispielsweise Ti-, Zr-, und Ge-Verbindungen vorteilhafte Katalysatoren, wie Jacquel, N., Freyermouth, F., Fenouillot, F., Rousseau, A., Pascault, J.P., Fuertes, P. and Saint-Loup, R. (2011), Synthesis and properties of poly(butylene succinate): Efficiency of different transesterification catalysts. J. Polym. Sci. A Polym. Chem., 49: 5301-5312 und die Patentschriften EP0747416B1, US7985566B2, EP2604640B1, WO2015/092073 andeuten.

Allerdings treten bei der Herstellung von PBS unerwartete Nebenreaktionen auf, die sich auf die Kettenstruktur des PBS auswirken. Wird die Polykondensationsphase in Rührkesseln durchgeführt, in denen die viskoser werdende Polymerschmelze zur Erzeugung von Oberfläche zwangsdurchmischt wird und damit Schereinflüssen ausgesetzt ist, werden Verzweigungsreaktionen induziert, die zum Verlust der linearen Kettenstruktur und zum Molmassenaufbau führen (Autoverzweigung). Die Verzweigungsreaktionen finden unkontrolliert statt und schließen damit die Herstellung gut definierter Kettenstrukturen aus. Die gezielte Herstellung linearer PBS-Typen ist in Abhängigkeit von der Molmasse nur noch eingeschränkt bis gar nicht möglich. Eine kontrollierte Einstellung des Verzweigungsgrades durch definierte Zugabe von multifunktionellen Monomeren werden unmöglich, da sich diese Verzweigungen mit den selbstinduzierten Verzweigungen überlagern.

Das Stattfinden der Verzweigungsreaktionen konnte über rheologische Messungen nachgewiesen werden (Oszillation). Das veränderte Fließverhalten verzweigter gegenüber linearen Polymeren ist dabei sowohl im Ausmaß der beobachteten Scherverdünnung sichtbar als auch im van-Gurp-Palmen-Plot, der den Phasenwinkel über dem komplexen Modul aufträgt. Interessant ist dabei, dass auch die kommerziellen PBS-Typen das typische, von linearen Polymeren abweichende Fließverhalten zeigen.

Die Ursache des beobachteten Verhaltens liegt in einem durch Scherung erzeugten thermischen Kettenabbau des Polyesters PBS, der zu endständigen Doppelbindungen führt, an denen wiederum die einem radikalischen Mechanismus folgenden Verzweigungsreaktionen induziert werden. Diese endständigen Doppelbindungen wurden mittels ¹H-NMR nachgewiesen, und zwar sowohl für kommerzielle PBS-Typen als auch für in durchmischten Polykondensationsreaktoren selbst synthetisierte PBS-Typen. Im Labor erzeugte PBS-Typen, die im Rotationsverdampfer verfahrensbedingt bei sehr geringer Scherbeanspruchung synthetisiert wurden, weisen keine endständigen Doppelbindungen auf und zeigen dementsprechend eine lineare Kettenstruktur. Die letztere Labormethode hat jedoch keine industrielle Bedeutung.

Die Kettenstruktur und die durch sie bedingten rheologischen Eigenschaften bzw. das Fließverhalten der Polymerschmelzen spielt für nahezu alle Verarbeitungsverfahren von Thermoplasten eine entscheidende Rolle. Für bestimmte Verarbeitungsverfahren, beispielsweise für das Spritzgießen dünnwandiger Teile, ist die Vermeidung unkontrollierter Verzweigungen essentiell.

Es ist bekannt, dass bei der herkömmlichen Polyestersynthese durch Schmelzepolykondensation thermische Abbaureaktionen auftreten, was aufgrund der Schädigung des Materials zu schlechteren mechanischen Eigenschaften führt. In der Beschreibung der Patentschrift US 8 318 893 wird beispielsweise erwähnt, dass die thermische Stabilität aliphatischer Polyester wie PBS gering ist und der Polyester während der Polymerisationsreaktion durch Nebenreaktionen thermisch zersetzt wird, was zur Verringerung der maximal möglichen Molmasse führt. Es wird auch beschrieben, dass neben phosphorhaltigen Antioxidantien, Lichtstabilisatoren, Gleitmitteln, Kristallisationsmittel ach thermische Stabilisatoren dem Polyester zugesetzt werden können, die vorteilhafterweise eine Verschlechterung der Produktqualität des enthaltenen Harzes während der Verarbeitung (Wärmeformung) unterrücken. In den Ausführungsbeispielen wird jedoch keine Rezeptur vorgestellt, aus der zu entnehmen ist, dass die Polyester stabilisiert werden. Der Patentschrift ist auch nicht zu entnehmen, dass bereits während der Herstellung von PBS Nebenreaktionen auftreten können, die zur unkontrollierten Verzweigung und zum unkontrollierten Molmassenaufbau führen, wogegen eine Stabilisierung wünschenswert wäre.

Die Aufrechterhaltung der Farbe und die Vermeidung des Molmassenabbaus während der Verarbeitung wird auch in der Beschreibung der Patentvorschrift Eastman (US5434238) für bernsteinsäurehaltige Copolyester thematisiert. Vorteilhaft kann hierfür die Zugabe einer Vielzahl von Phosphiten und Phosphoniten sein. Beispielsweise enthält das Ausführungsbeispiel 11 das Phosphit Ultranox 626, das ein sekundäres Antioxidans ist und Hydroperoxide zersetzt.

In der EP0747416B1 und der US5714569 sind Verfahren zur Synthese von PBS beschrieben, die darauf hinweisen, dass bei der Verwendung des aliphatischen Polyesters PBS Antioxidantien, Wärmestabilisatoren, UV-Absorber sowie Gleitmittel, Wachse, Farbstoffe, Kristallisationsförderer und dergleichen eingesetzt werden können, falls dies erforderlich ist. Diese werden jedoch im Anschluss der Polymerisation zugegeben, wie die Ausführungsbeispiele zeigen. Wahlweise wurde das phenolische Antioxidans Irganox 1010 oder das Produkt Irganox B225, das ein Gemisch aus dem organischen Phosphit Irgafos 168 und dem phenolischen Antioxidans Irganox 1010 ist, sowie Calciumstearat als Schmiermittel und Phosphorsäure als Entfärbungsmittel zugegeben. Dies wirkt sich vorteilhaft auf die Verarbeitungsstabilität aus, Nebenreaktionen während der Herstellung werden damit selbstverständlich nicht unterbunden.

Die Offenlegungsschrift WO2016189239A1 beschreibt die Herstellung von Polyestern auf der Basis von Terephthalsäure, 1,4-Cyclohexandimethanol und Isosorbid. Darin heißt es, dass insbesondere Isosorbid-haltige Polyester im Allgemeinen eine Färbung aufweisen, die bisher durch die Empfindlichkeit des Isosorbids gegenüber thermischer Oxidation bei hohen Temperaturen erklärt wird. Es wird empfohlen, um Polymere mit geringer Färbung zu erhalten, die Arbeit unter sauerstofffreier Atmosphäre durchzuführen, mit einer geringen Isosorbidmenge und bei niedrigeren Temperaturen zu arbeiten. Zusätzlich heißt es, dass zur Reduzierung der Färbung der Einsatz von Antioxidantien vorteilhaft ist. Bei den Antioxidantien kann es sich um primäre und/oder sekundäre Antioxidantien handeln. Das primäre Antioxidans kann ein sterisch gehindertes Phenol sein, wie die Verbindungen Irganox^{®}1010 oder Irganox^{®}1076 (oder identische Produkte anderer Hersteller) oder ein Phosphonat wie Irgamod^{®}195. Das sekundäre Antioxidans kann aus dreiwertigen Phosphorverbindungen wie Ultranox^{®}626, Doverphos^{®}S-9228, Hostanox^{®}PEPQ oder Irgafos168 bestehen. Vorzugsweise wird in den Ausführungsbeispielen das phenolische Antioxidans Irganox^{®}1010 eingesetzt. In den Offenlegungsschriften US20190177474A1 und WO2018020193A1 werden die gleichen Empfehlungen ausgesprochen. Aussagen zur Unterdrückung von Verzweigungsreaktionen gibt es nicht.

Die Offenlegungsschrift US20190375890A1 beschreibt die Herstellung von Polyestern auf der Basis von 2,5-Furandicarbonsäure, 1,4-Cyclohexandimethanol und Isosorbid. Auch für diese Polyester wirken sich primäre und/oder sekundäre Antioxidantien vorteilhaft auf die Aufrechterhaltung der Farbe aus, wie man der Beschreibung entnehmen kann. Es wurde in den Ausführungsbeispielen Ex3 und Ex4 mit Irganox^{®}1010 und Hostanox^{®}P-EPQ gezeigt, dass farblose Polymere erhalten werden, auch hier fehlen jedoch Hinweise auf Verzweigungsphänomene.

Aus dem Stand der Technik geht hervor, dass die Vermeidung eigeninduzierter Verzweigungsreaktionen für aliphatische Polyester, die zu unkontrollierten Kettenstrukturen führen, bislang keine Beachtung fand. Für verarbeitungsangepasste PBS-Typen ist die Kontrolle der Verzweigungen jedoch essentiell.

Der Befund der Autoverzweigung während der PBS-Synthese, der zu einem Molmassenaufbau führt, wird im Stand der Technik bislang nicht thematisiert. Hauptaugenmerk lag auf der Aufrechterhaltung der Farbe und der Vermeidung des Molmassenabbaus während der Verarbeitung, wie Patentvorschriften zeigen.

Vorteilhaft wäre daher ein Verfahren, mit dem die Verzweigungen generierenden Nebenreaktionen unterbunden werden können. Weiterhin vorteilhaft wäre die Möglichkeit, anstelle unkontrollierter Verzweigungsreaktionen gezielt Verzweigungen im für das Verarbeitungsverfahren gewünschten Ausmaß erzeugen zu können. Besonders bevorzugt wäre ein Verfahren, das beide Anforderungen durch Zugabe nur eines Additivs bei der Synthese lösen kann.

Aufgabe der vorliegenden Erfindung ist es somit, ein Verfahren zur Herstellung von Polyestern anzugeben, bei denen die eigeninduzierten Verzweigungsreaktionen kontrolliert werden können und somit zum einen der Grad der Verzweigung der hergestellten aliphatischen Polyester, zum anderen gleichzeitig deren Polydispersität gezielt eingestellt werden können.

Diese Aufgabe wird mit dem erfindungsgemäßen Verfahren mit den Merkmalen des Patentanspruchs 1 gelöst. Die abhängigen Patentansprüche stellen dabei vorteilhafte Weiterbildungen dar.

Die vorliegende Erfindung betrifft somit ein Verfahren zur Herstellung eines aliphatischen Polyesters, bei dem in einem ersten Schritt (Veresterung) mindestens ein aliphatisches Diol mit mindestens einer aliphatischen Dicarbonsäure zu einem Präpolymeren umgesetzt und das Präpolymere in einem zweiten Schritt anschließend einer Polykondensation unterworfen wird, dadurch gekennzeichnet, dass der erste und/oder zweite Schritt in Gegenwart mindestens eines phenolischen Antioxidans durchgeführt wird.

Das vorliegende Verfahren und die Zusammensetzung sind für die Synthese von aliphatischen Polyestern aus einem oder mehreren Diolen und einer oder mehreren Dicarbonsäuren geeignet.

Grundsätzlich kann die Zugabe des phenolischen Antioxidans bei jedem beliebigen Zeitpunkt der Synthese erfolgen, es ist jedoch bevorzugt bereits dem Veresterungsschritt zuzusetzen.

Das erfindungsgemäße Verfahren führt dazu, dass während der Polykondensation keine unkontrollierten, eigeninduzierten Verzweigungsreaktionen stattfinden, die zu unkontrollierter Kettenstruktur und unkontrolliertem Molmassenaufbau führen. Die resultierenden Polymere weisen dadurch ein vorteilhaftes Verarbeitungsverhalten bei den üblichen Methoden wie z.B. Extrusion oder Spritzguss auf.

Erfindungsgemäß wurde überraschenderweise gefunden, dass primäre Antioxidantien die scherinduzierten Verzweigungsreaktionen unterdrücken und in Abhängigkeit von ihrer Struktur i) lineare Kettenstrukturen mit der zusätzlichen Möglichkeit zur gezielten Limitierung der Molmasse, ii) lineare Kettenstrukturen mit maximaler Molmasse in Abhängigkeit vom Umsatz (gemäß der Carothers-Gleichung) oder iii) gezielt verzweigte Kettenstrukturen erzeugen.

Somit ist bevorzugt vorgesehen, dass das erfindungsgemäß eingesetzte phenolische Antioxidans
i) genau eine
ii) genau zwei oder keine
iii) mindestens 3 umesterungsfähige Gruppen aufweist.

Unter einer umesterungsfähigen Gruppe wird hierbei eine chemische Gruppierung des phenolischen Antioxidans verstanden, die unter den Reaktionsbedingungen der Herstellung des aliphatischen Polyesters mit einer Alkohol- und/oder Säurefunktionalität der eingesetzten Edukte zur Herstellung des aliphatischen Polyesters unter Ausbildung einer chemischen Bindung reagieren kann. Derartige Gruppierungen können beispielsweise Carbonsäureesterfunktionalitäten sein.

Beispielsweise und insbesondere bevorzugt beinhaltet das mindestens eine phenolische Antioxidans mindestens eine der nachfolgenden Gruppen 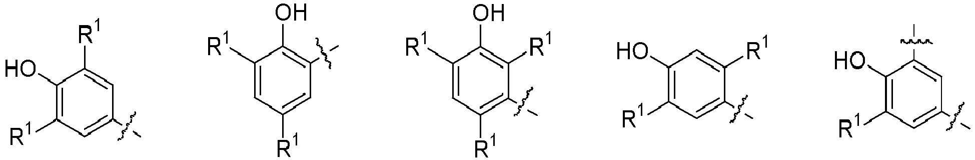 wobei R¹ bei jedem Auftreten gleich oder verschieden ist und ausgewählt ist aus der Gruppe bestehend aus linearen oder verzweigten Alkylresten mit 1 bis 8 Kohlenstoffatomen, insbesondere tert-Butyl oder Methyl; oder Wasserstoff, wobei mindestens eine Gruppe R¹ verschieden von Wasserstoff ist.

Für den Fall, dass das phenolische Antioxidans genau eine umesterungsfähige Gruppe aufweist, ist es bevorzugt, dass das phenolische Antioxidans ausgewählt ist aus der Gruppe bestehend aus Verbindungen oder Mischungen mehrerer Verbindungen gemäß allgemeiner Formel I, II und III
a) 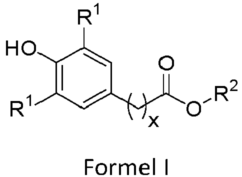 wobei
   - R¹: wie voranstehend definiert ist,
   - x: 0, 1, 2, 3 oder 4, vorzugsweise 0 oder 2 ist, und
   - R²: ausgewählt aus der Gruppe bestehend aus linearen oder verzweigten aliphatischen Resten mit 1 bis 36 Kohlenstoffatomen, oder teilaromatischen Resten, insbesondere gemäß nachfolgender allgemeiner Formel Ia 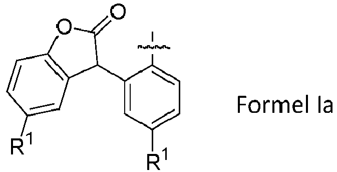
   wobei R¹ die oben angegebene Bedeutung aufweist,
b) 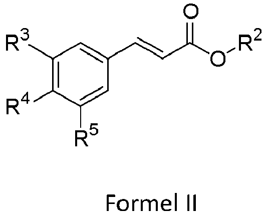 wobei
   - R³, R⁴ und R⁵: jeweils unabhängig voneinander ausgewählt sind aus der Gruppe bestehend aus Hydroxy, linearen oder verzweigten Alkoxygruppen mit 1 bis 6 Kohlenstoffatomen und Wasserstoff, mit der Maßgabe, dass mindestens einer der Reste R¹, R² und R³ ein Hydroxyrest und/oder eine lineare oder verzweigte Alkoxygruppe mit 1 bis 6 Kohlenstoffatomen ist, und
   - R²: die zuvor angegebene Bedeutung hat, sowie
c) 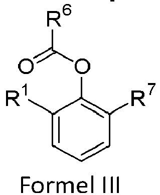
   - R¹: bei jedem Auftreten gleich oder verschieden ist und ausgewählt ist aus der Gruppe bestehend aus linearen oder verzweigten Alkylresten mit 1 bis 8 Kohlenstoffatomen, insbesondere tert-Butyl oder Methyl; oder Wasserstoff,
   - R⁶: ausgewählt ist aus der Gruppe bestehend aus ungesättigten Resten, insbesondere -CH=CH₂ oder -(Me)C=CH₂ sowie linearen oder verzweigten Alkylresten mit 1 bis 8 Kohlenstoffatomen,
   - R⁷: ausgewählt ist aus der Gruppe bestehend aus Resten R¹ oder Resten der allgemeinen Formel Illa 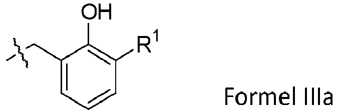
wobei R¹ die zuvor angegebene Bedeutung aufweist.

Beispielhafte Vertreter der zuvor genannten phenolischen Antioxidantien sind hierbei:

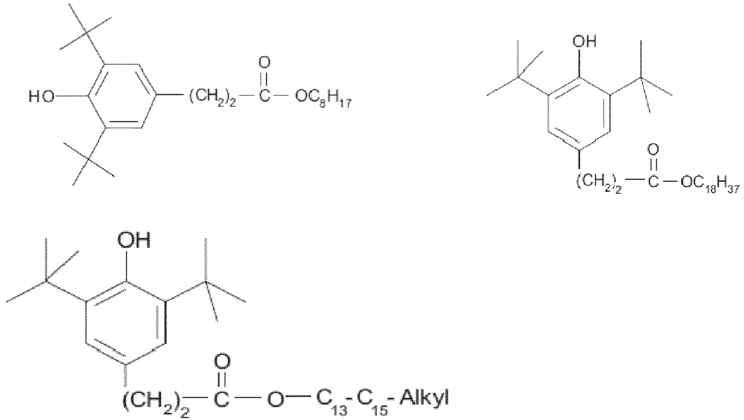

Weitere geeignete phenolische Antioxidantien sind: 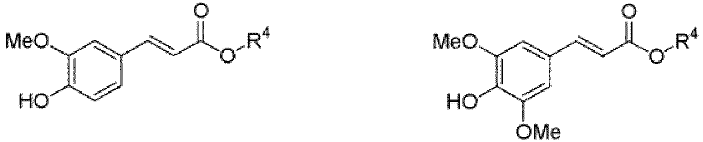 wobei R⁴ ein aliphatischer Rest -(CH2)n-CH3 und n=6-24 ist.

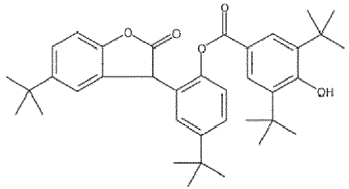

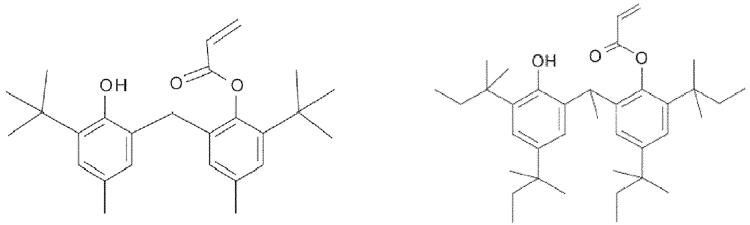

Da das Antioxidans neben seiner Funktion als Radikalfänger gleichzeitig als monofunktioneller Kettenabbrecher wirkt, ist die Molmasse des entstehenden Polyesters abhängig von der Konzentration des Antioxidans im System.

Derartige, genau eine umesterungsfähige Gruppe aufweisende phenolische Antioxidantien wirken neben ihrer Funktion als Radikalfänger gleichzeitig als monofunktionelles kettenabbrechendes Agens, die Molmasse des entstehenden Polyesters kann somit in direkte Abhängigkeit von der Konzentration des betreffenden Antioxidans während der Reaktion gesteuert bzw. eingestellt werden.

Gemäß einer bevorzugten Ausführungsform ist das phenolische Antioxidans gemäß der oben angegebenen Formel II dabei ausgebildet aus den nachfolgenden Verbindungen: 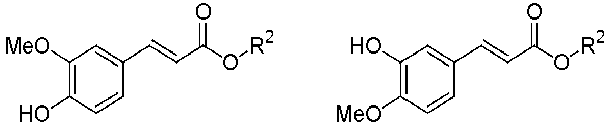 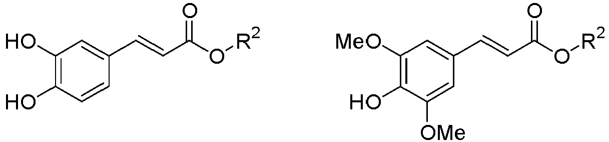 wobei R² die zuvor angegebene Bedeutung hat.

Alternativ hierzu kann das phenolische Antioxidans bevorzugt ausgewählt sein oder der Gruppe bestehend aus phenolischen Antioxidantien mit genau zwei umesterungsfähigen Gruppen und insbesondere ausgewählt ist aus der Gruppe bestehend aus Verbindungen oder Mischungen mehrerer Verbindungen gemäß allgemeiner Formel IV 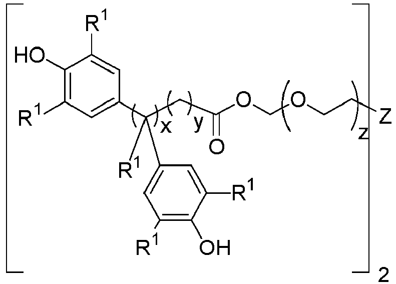 wobei
- R¹: die zuvor angegebene Bedeutung hat,
- Z: eine chemische Bindung, Schwefel oder Sauerstoff ist,
- x: 0 oder 1 ist,
- y: 0, 1, 2, 3 oder 4 und
- z: 0 oder 1 bis 12 ist.

Beispiele für derartige bifunktionelle phenolische Antioxidantien sind hierbei die nachfolgenden Verbindungen

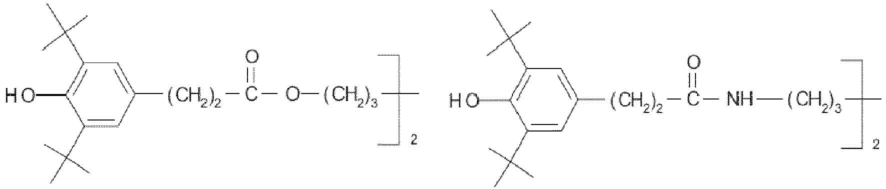

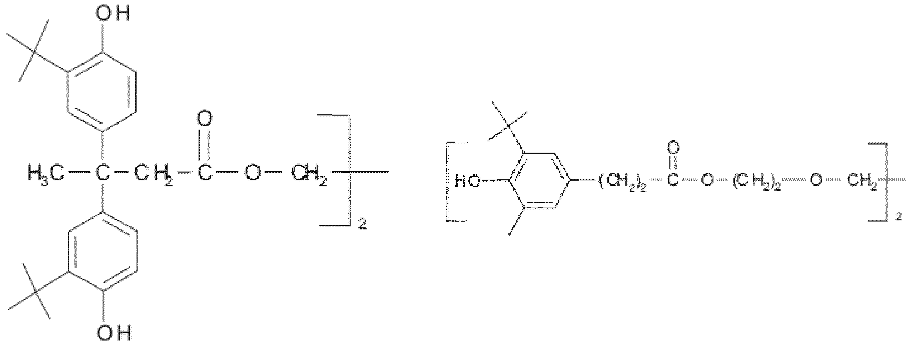

Alternativ bzw. additiv hierzu kann das mindestens eine phenolische Antioxidans ebenso ausgebildet sein aus der Gruppe bestehend aus phenolischen Antioxidantien ohne umesterungsfähige Gruppe und insbesondere ausgewählt ist aus der Gruppe bestehend aus Verbindungen oder Mischungen mehrerer Verbindungen, die einen der nachfolgenden Reste aufweisen 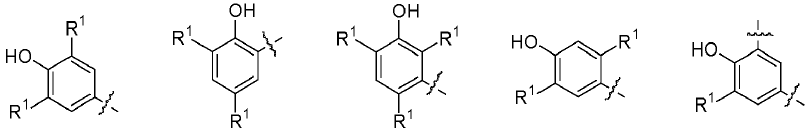 insbesondere ausgewählt ist aus der Gruppe bestehend aus den nachfolgenden Verbindungen 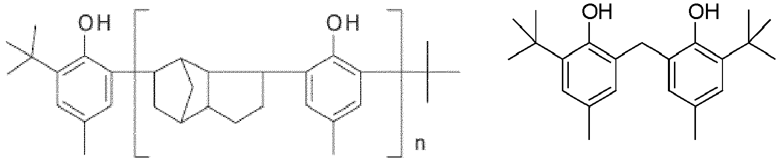 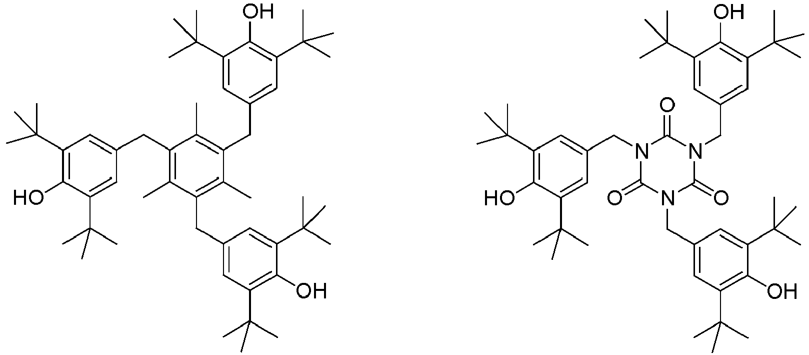 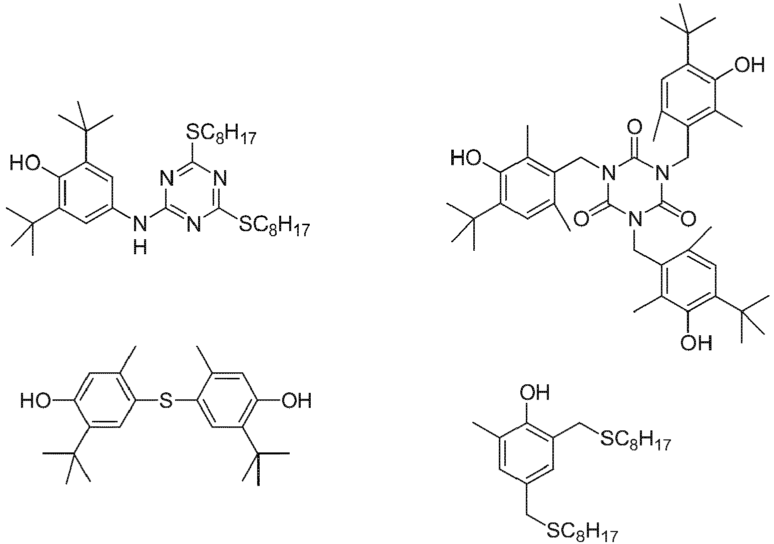 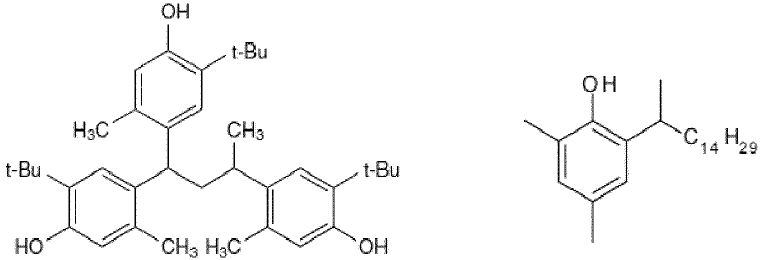 wobei n 1 bis 10 bedeutet.

Eine weitere bevorzugte Ausführungsform sieht vor, dass das mindestens eine phenolische Antioxidans mindestens drei umesterungsfähige Gruppen aufweist und insbesondere ausgewählt ist aus der Gruppe bestehend aus Verbindungen oder Mischungen mehrerer Verbindungen gemäß allgemeiner Formel V 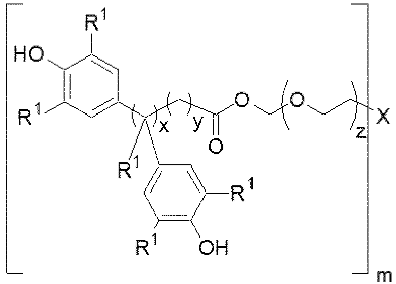 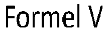 wobei R¹, x, y und z wie zuvor definiert sind und
- m: 4 oder 3 ist, und
- X: für m = 4 ein Kohlenstoffatom ist und für m = 4 ausgewählt ist aus der
Gruppe bestehend aus CH und CR1, wobei R1 wie voranstehend definiert ist.

Hierbei ist es von besonderem Vorteil, wenn das mindestens eine phenolische Antioxidans vier umesterungsfähige Gruppen aufweist und insbesondere die nachfolgende chemische Struktur aufweist

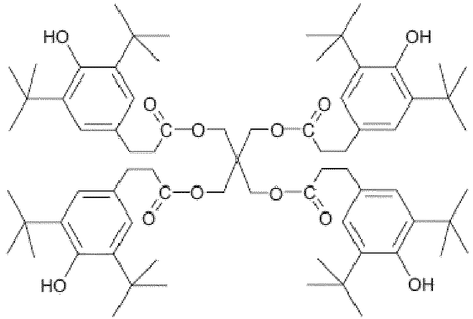

Bevorzugt ist ferner, wenn die Gesamtheit des mindestens einen phenolischen Antioxidans, bezogen auf die Gesamtheit aus dem mindestens einen aliphatischen Diol und der mindestens einen aliphatischen Dicarbonsäure, in einem Gewichtsverhältnis von 0,01 bis 5,0 Gew.-%, bevorzugt von 0,05 bis 2,0 Gew.%, besonders bevorzugt von 0,10 bis 1,0 Gew.-% eingesetzt wird.

Hierbei kann es bevorzugt vorgesehen sein, dass das mindestens eine phenolischen Antioxidans in Form eines Pulvers, eines Granulats, eines Kompaktats, als Schmelze, Flüssigkeit, Lösung, Suspension oder Emulsion, bevorzugt als Pulver, Granulat oder Kompaktat oder als Schmelze, erfolgt.

Das mindestens eine aliphatische Diol ist bevorzugt ausgewählt aus der Gruppe bestehend aus linearen oder verzweigten aliphatischen Diolen mit 2 bis 18 Kohlenstoffatomen, insbesondere Ethylenglycol, 1,2-Propandiol, 1,3-Propandiol, 1,4-Butandiol, 1,5-Pentandiol, 1,6-Hexandiol, 1,8-Octandiol, 1,12-Dodecandiol, 1,16-Hexadekandiol, Neopentylglycol und 1,4-Cyclohexandimethanol sowie Mischungen und Kombinationen hiervon. Weiterhin können cycloaliphatische Diole eingesetzt werden wie z.B. 1,4-Cyclohexandiol oder 1,3-Cyclohexandiol. Ebenso sind Mischungen und Kombinationen hiervon denkbar.

Ebenso ist es von Vorteil, wenn die mindestens eine aliphatische Dicarbonsäure ausgewählt ist aus der Gruppe bestehend linearen aliphatischen Dicarbonsäuren mit 2 bis 36 Kohlenstoffatomen, insbesondere Bernsteinsäure, Malonsäure, Glutarsäure, Adipinsäure, Pimelinsäure, Suberinsäure, Azelainsäure und Sebacinsäure, Brassylsäure, Thapsiasäure oder auch Dimerfettsäuren sowie Mischungen und Kombinationen hiervon. Weiterhin können cycloaliphatische Dicarbonsäuren eingesetzt werden wie z.B. 1,3-Cyclohexandicarbonsäure oder 1,4-Cyclohexandicarbonsäure.

In untergeordnetem Maße (< 20 mol-%) können auch nicht aliphatische Dicarbonsäuren oder Diole eingesetzt werden. Beispiele sind Terephthalsäure, Isophthalsäure, Hydrochinon oder Resorcin. Ebenso können alpha, omega-Hydroxycarbonsäuren wie z.B. Milchsäure, Hydroxybuttersäure oder Hydroxyvaleriansäure anteilig verwendet werden.

Das erfindungsgemäße Verfahren kann in einer bevorzugten Ausführungsform kontinuierlich durchgeführt werden. Hierbei ist es bevorzugt, dass der erste Schritt bei einer Temperatur von 160 bis 190 °C, weiter bevorzugt von 165°C bis 180°C und der zweite Schritt bei einer Temperatur von 220 bis 250 °C, weiter bevorzugt von 225 bis 235 °C durchgeführt wird.

Alternativ ist es ebenso möglich, dass das erfindungsgemäße Verfahren diskontinuierlich durchgeführt wird. Bei dieser Ausführungsform ist es bevorzugt, wenn der erste Schritt mit einer Temperaturrampe von 145°C bis 185°C, und der zweite Schritt mit einer Temperaturrampe von 185°C bis 250°C, bevorzugt bis 235°C durchgeführt wird.

Insbesondere wird ein erster und/oder zweiter Schritt in Anwesenheit mindestens eines Umesterungskatalysators durchgeführt, wobei vorzugsweise der mindestens eine Umesterungskatalysator ausgewählt ist aus der Gruppe bestehend aus Metallverbindungen, die die Metalle Li, Mg, Ca, Ba, La, Ce, Ti, Zr, f, V, Mn, Fe, Co, Ir, Ni, Zn, Ge und/oder Sn enthalten, insbesondere Metallalkoxide, Metallkomplexe oder anorganische Metallverbindungen wie Oxide, Hydroxide, Carbonate, Phosphate, Sulfate, Nitrate und Chloride umfassen der zuvor genannten Metalle.

Nach Abschluss des zweiten Schrittes des erfindungsgemäßen Verfahrens kann weiter bevorzugt mindestens ein Additiv ausgewählt aus der Gruppe bestehend aus UV-Absorbern, Lichtstabilisatoren, insbesondere der gehinderten Amine als Licht-(HALS) und Langzeitwärmestabilisatoren (HAS), Metalldesaktivatoren, Füllstoffdesaktivatoren, Antiozonantien, Nukleierungsmitteln, Antinukleierungsmitteln, Transparenzverbesserern (Clarifier), Schlagzähigkeitsverbesserern, Weichmachern, Gleitmitteln, Rheologiemodifikatoren, Thixotropiemitteln, Kettenverlängerern, Verarbeitungshilfsmitteln, Entformungshilfsmitteln, Flammschutzmitteln, Pigmenten, Farbstoffen, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobierungsmitteln, Oberflächenmodifikatoren, Hydrolysestabilisatoren, Haftvermittlern, Dispergiermitteln, Kompatibilisatoren, Sauerstofffängern, Säurefängern, Acetaldehyd- und Formaldehydfängern, Treibmitteln, Abbau-Additiven, Entschäumungshilfsmitteln, Geruchsfängern und geruchsverbessernde Substanzen, Markierungsmitteln, Antifoggingmitteln, Glanzverbesserern, Mattierungsmitteln, Additiven zur Erhöhung der elektrischen und/oder Wärmeleitfähigkeit, Repellants, Füllstoffen und Verstärkungsstoffe zugegeben bzw. eingearbeitet werden. Die Additive können z. B. bei der Synthese insbesondere vor dem Austrag oder beim Austrag aus dem Reaktionsbehälter zugegeben werden.

Nach der Synthese können ggf. weitere Verfahrensschritte zur Erhöhung des Molekulargewichts beispielsweise über Festphasekondensation oder durch Kettenverlängerung mittels reaktiver Extrusionsverfahren erfolgen. Die Festphasekondensation kann dabei ggf. unter Zusatz von geeigneten Katalysatoren wie z.B. Sb₂O₃, GeO₂ und/oder Phosphonaten erfolgen. Geeignete Kettneverlängerer insbesondere linearer Art sind beispielsweise Diepoxide, Bis-Oxazoline, Bis-Oxazolone, Bis-Oxazine, Diisocyanate, Dianhydride, Bis-Acyllactame, Bis-Maleimide, Dicyanate oder Carbodiimide.

Die vorliegende Erfindung eignet sich insbesondere zur Herstellung von aliphatischen Polyestern, insbesondere in Form von Spritzgussstellen, Folien oder Filmen, Schäumen, Fasern, Kabeln und Rohren, Profilen, Hohlkörpern, Bändchen, Membranen, wie z. B. Geomembranen, oder Klebestoffen, die über Extrusion, Spritzguss, Blasformen, Kalandrieren, Pressverfahren, Spinnprozesse, Rotomoulding verarbeitet werden.

Ganz besonders bevorzugt wird das Verfahren zur Herstellung von Polybutylensuccinat eingesetzt.

Die vorliegende Erfindung wird anhand der nachfolgenden Ausführungsformen näher beschrieben, ohne die vorliegende Erfindung auf die dargestellten Beispiele zu beschränken.

Die folgenden Beispiele erbringen zunächst den Nachweis, dass die Schmelzepolykondensation von Bernsteinsäure und 1,4-Butandiol in unter Scherung durchmischten Reaktoren zu verzweigten, ohne scherintensive Durchmischung jedoch zu linearen Polymeren führt. Nachfolgend wird gezeigt, dass eigeninduzierte Verzweigungsreaktionen durch Zugabe von primären Antioxidantien mit null, ein oder zwei umesterungsfähigen Funktionen bereits innerhalb der Polykondensationsreaktion unterbunden werden können und so auch unter intensiver Scherbeanspruchung lineare Polymere erhalten werden. Ein Beispiel für die Beeinflussung der Molmasse des finalen Polymers durch Antioxidantien mit genau einer umesterungsfähigen Gruppe in Abhängigkeit von der Konzentration des Antioxidans wird ebenso ausgeführt wie die Möglichkeit, durch Zugabe eines Antioxidans mit mehreren umesterungsfähigen Gruppen eine gezielte Verzweigung hervorzurufen.

Beispiel 1: lineares PBS durch Polykondensation mit sehr geringer Scherung während der Polykondensation (im Rotationsverdampfer, Vergleichsbeispiel, nicht erfindungsgemäß) Veresterung: Ein PBS-Oligomer wurde aus Bernsteinsäure und 1,4-Butandiol wie folgt hergestellt: 789,7 g Bernsteinsäure und 701,4 g 1,4-Butandiol wurden in einem 2 L Dreihalskolben auf ca. 140°C erhitzt (TÖI = 200°C), die Rührgeschwindigkeit betrug 200 rpm. Bei dieser Temperatur wurde für ca. 100 min kontinuierlich die entstandene Menge Wasser bis zu einem Umsatz von ca. 70% abdestilliert. Anschließend wurde die Temperatur des Ölbads auf 250°C erhöht und die Vakuumphase eingeleitet. Die währenddessen gebildete Menge Wasser wurde bei 200°C und 30 mbar entfernt (Umsatz: 95%). Anschließend wurde die Oligomerschmelze in eine Schale gegossen, abgekühlt und zerkleinert zerbrochen (Ausbeute: 1048,7 g).

Umesterung und Polykondensation: In einem 250 mL Einhalskolben wurden 50 g PBS-Oligomer vorgelegt und am Rotationsverdampfer mit Ölbad aufgeschmolzen. Anschließend wurde der Katalysator TyzorTPT (120 mg) zur Schmelze gegeben. Nach der Zugabe wurde die Polykondensation eingeleitet. Dafür wurde die Ölbadtemperatur auf 250°C erhöht und der Kolben mit einer Geschwindigkeit von ca. 50 rpm rotiert. Nachdem die Ölbadtemperatur ca. 230°C betrug, wurde vorsichtig Vakuum angelegt (900 mbar). Innerhalb weiterer 10 min wurde die Temperatur auf 250°C erhöht und der Druck auf 0.3 mbar reduziert. Der Beginn der Vakuumphase markiert auch den Reaktionsstart. Abgebrochen wurde die Polykondensation, wenn die Schmelze nicht mehr floss. Die Polymerschmelze wurde dann isoliert, abgekühlt und zerkleinert. In den oszillationsrheologischen Messungen sind die Merkmale eines linearen Polymers zu erkennen.

Beispiel 2: PBS-Herstellung im 7,5L-Batchreaktor (Polykondensationsphase mit hoher Scherung, nicht erfindungsgemäß, verzweigtes Polymer).

Die Herstellung von PBS wurde wie folgt durchgeführt: 2752,45g Bernsteinsäure und 2435,2g 1,4-Butandiol wurden in einem 7,5L Druckreaktor auf ca. 150°C innerhalb von 30min. erhitzt, die Rührgeschwindigkeit betrug 75rpm. Kurz nach Erreichen der Temperatur setzte die Veresterung ein. Währenddessen wurde Wasser kontinuierlich abgezogen. Die Veresterungsstufe dauerte ca. 70min, wobei die Temperatur auf 185°C erhöht wurde. Anschließend wurden 2,52g TyzorTPT zugegeben und die Nachveresterungsstufe eingeleitet. Dafür wurde der Druck kontinuierlich auf 70mbar innerhalb von 160min reduziert, während die Temperatur auf 235°C erhöht wurde. Nach der Nachveresterungsstufe wurden 2288g Prepolymer aus dem Reaktor ausgefahren, um das Oberflächen-Volumen-Verhältnis im Sinne der nachfolgenden diffusionskontrollierten Polykondensation zu erhöhen.

Die noch im Rührkessel verbliebenen ca. 2kg Prepolymer wurden für die Polykondensationsstufe eingesetzt, die bei 235°C und einem Druck von 3mbar durchgeführt wurde. Bevor die Vakuumphase eingeleitet wurde, wurden 3,31g TyzorTPT zugegeben. Nach Erreichen des Vollvakuums betrug die Reaktionszeit der Polykondensationsstufe 180min. Dabei wurde die Rührgeschwindigkeit auf 40rpm reduziert. Anschließend wurde die Schmelze mit einem Druck von 3bar bei 210°C aus dem Reaktor ausgefahren und granuliert. Der MFI betrug 3,9cm3/10min (150°C). In den oszillationsrheologischen Messungen sind die Merkmale eines verzweigten Polymers zu erkennen.

Beispiel 3: PBS-Herstellung im 7,5L-Batchreaktor mit AO-1 (erfindungsgemäß, Polykondensation mit hoher Scherung, AO-1 ohne umesterungsfähige Gruppe).

Die Polykondensation wurde wie folgt durchgeführt: 1376,5g Bernsteinsäure, 1218,4g 1,4-Butandiol und 10g 3,3',3',5,5',5'-Hexa-tert-butyl-a,a',a'-(mesity-lene-2,4,6-triyl) tri-p-cresol (AO-1) wurden in einem 7,5L Druckreaktor auf ca. 150°C innerhalb von 30min. erhitzt, die Rührgeschwindigkeit betrug 75rpm. Kurz nach Erreichen der Temperatur setzte die Veresterung ein. Währenddessen wurde Wasser kontinuierlich abgezogen. Die Veresterungsstufe dauerte ca. 70min, wobei die Temperatur auf 185°C erhöht wurde. Anschließend wurden 1,22g TyzorTPT zugegeben und die Nachveresterungsstufe eingeleitet. Dafür wurde der Druck kontinuierlich auf 50mbar innerhalb von 180min reduziert, die Temperatur auf 235°C erhöht. Bevor die Vakuumphase eingeleitet wurde, wurden weitere 3,57g TyzorTPT zugegeben. Nach Erreichen des Vollvakuums betrug die Reaktionszeit der Polykondensationsstufe 175min. Anschließend wurde die Schmelze mit einem Druck von 3bar bei 210°C aus dem Reaktor ausgefahren und granuliert. Der MFI betrug 12,7cm3/10min (150°C). In den oszillationsrheologischen Messungen sind die Merkmale eines linearen Polymers zu erkennen.

Beispiel 4: PBS-Herstellung im 7,5L-Batchreaktor mit AO-2 (erfindungsgemäß, Polykondensation mit hoher Scherung, AO-2 mit einer umesterungsfähigen Gruppe).

Die Polykondensation wurde wie folgt durchgeführt: 1375,7g Bernsteinsäure, 1217,5g 1,4-Butandiol und 10g Octadecyl-3-[3,5-di-tert-butyl-4-hydroxyphenyl] propionat (AO-2) wurden in einem 7,5L Druckreaktor auf ca. 150°C innerhalb von 30min. erhitzt, die Rührgeschwindigkeit betrug 75rpm. Kurz nach Erreichen der Temperatur setzte die Veresterung ein. Währenddessen wurde Wasser kontinuierlich abgezogen. Die Veresterungsstufe dauerte ca. 70min, wobei die Temperatur auf 185°C erhöht wurde. Anschließend wurden 1,19gTyzorTPT zugegeben und die Nachveresterungsstufe eingeleitet. Dafür wurde der Druck kontinuierlich auf 50mbar innerhalb von 180min reduziert, die Temperatur auf 235°C erhöht. Bevor die Vakuumphase eingeleitet wurde, wurden weitere 3,58g TyzorTPT zugegeben. Nach Erreichen des Vollvakuums betrug die Reaktionszeit der Polykondensationsstufe 175min. Anschließend wurde die Schmelze mit einem Druck von 3bar bei 210°C aus dem Reaktor ausgefahren und granuliert. Der MFI betrug 16,3cm3/10min (150°C). In den oszillationsrheologischen Messungen sind die Merkmale eines linearen Polymers zu erkennen.

Beispiel 5: PBS-Herstellung im 7,5L-Batchreaktor mit AO-2 (erfindungsgemäß, Polykondensation mit hoher Scherung, AO-2 mit einer umesterungsfähigen Gruppe).

Die Polykondensation wurde wie folgt durchgeführt: 1375,9g Bernsteinsäure, 1218,3g 1,4-Butandiol und 4g Octadecyl-3-[3,5-di-tert-butyl-4-hydroxyphenyl] propionat (AO-2) wurden in einem 7,5L Druckreaktor auf ca. 150°C innerhalb von 30min. erhitzt, die Rührgeschwindigkeit betrug 75rpm. Kurz nach Erreichen der Temperatur setzte die Veresterung ein. Währenddessen wurde Wasser kontinuierlich abgezogen. Die Veresterungsstufe dauerte ca. 70min, wobei die Temperatur auf 185°C erhöht wurde. Anschließend wurden 1,21g TyzorTPT zugegeben und die Nachveresterungsstufe eingeleitet. Dafür wurde der Druck kontinuierlich auf 50mbar innerhalb von 180min reduziert, die Temperatur auf 235°C erhöht. Bevor die Vakuumphase eingeleitet wurde, wurden weitere 3,57g TyzorTPT zugegeben. Nach Erreichen des Vollvakuums betrug die Reaktionszeit der Polykondensationsstufe 175min. Anschließend wurde die Schmelze mit einem Druck von 3bar bei 210°C aus dem Reaktor ausgefahren und granuliert. Der MFI betrug 12,0cm3/10min (150°C). In den oszillationsrheologischen Messungen sind die Merkmale eines linearen Polymers zu erkennen.

Beispiel 6: PBS-Herstellung im 7,5L-Batchreaktor mit AO-3 (erfindungsgemäß, Polykondensation mit hoher Scherung, AO-3 mit 4 umesterungsfähigen Gruppen).

Die Polykondensation wurde wie folgt durchgeführt: 1375,3g Bernsteinsäure, 1217,1g 1,4-Butandiol und 10g Pentaerythritol tetrakis[3-[3,5-di-tert-butyl-4-hydroxyphenyl] propionat (AO-3) wurden in einem 7,5L Druckreaktor auf ca. 150°C innerhalb von 30min. erhitzt, die Rührgeschwindigkeit betrug 75rpm. Kurz nach Erreichen der Temperatur setzte die Veresterung ein. Währenddessen wurde Wasser kontinuierlich abgezogen. Die Veresterungsstufe dauerte ca. 70min, wobei die Temperatur auf 185°C erhöht wurde. Anschließend wurden 1,23g TyzorTPT zugegeben und die Nachveresterungsstufe eingeleitet. Dafür wurde der Druck kontinuierlich auf 50mbar innerhalb von 180min reduziert, die Temperatur auf 235°C erhöht. Bevor die Vakuumphase eingeleitet wurde, wurden weitere 3,57g TyzorTPT zugegeben. Nach Erreichen des Vollvakuums betrug die Reaktionszeit der Polykondensationsstufe 175min. Anschließend wurde die Schmelze mit einem Druck von 3bar bei 210°C aus dem Reaktor ausgefahren und granuliert. Der MFI betrug 6,1cm3/10min (150°C). In den oszillationsrheologischen Messungen sind die Merkmale eines verzweigten Polymers zu erkennen.

### Rheologie

Dynamische viskoelastische Spektren wurden mit einem ARES-Rheometer (TA Instruments) ermittelt. Wir verwendeten eine parallele Platte-Platte-Geometrie mit einem Plattenradius von 25 mm, getrennt durch einen Spalt von 650 µm. Die Proben wurden in das Rheometer geladen und für 5 min bei 130°C äquilibriert. Dann wurden Dehnungs-Sweep-Experimente mit Dehnungen von 0,01 % bis 100 % bei w = 10 rad/s und 130°C durchgeführt, um den linearen viskoelastischen Bereich zu bestimmen. Anschließend wurden dynamische Frequenzsweeps über einen Frequenzbereich von 500-0,5 rad/s bei 130°C mit einer Dehnung von 0,5 % durchgeführt.

### Ergebnisse

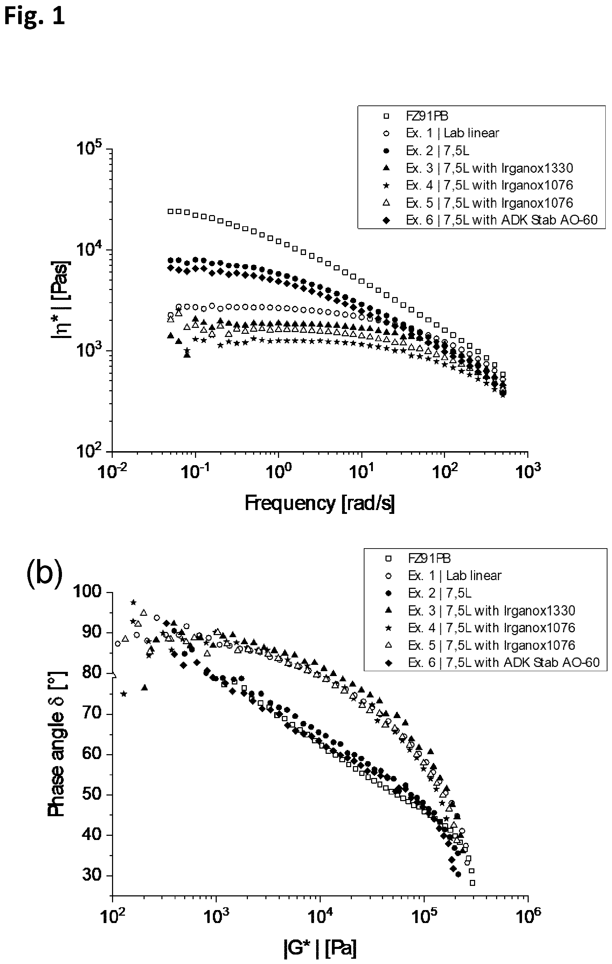

Die Schmelzepolykondensation von Bernsteinsäure und 1,4-Butandiol zu PBS gemäß Beispiel 2 liefert überraschenderweise ein Material, das in den oszillationsrheologischen Messungen typische Merkmale eines verzweigten Polymeren zeigt (siehe Fig. 1a und 1b). Fig. 1 zeigt in Teilabbildung a) dynamische Frequenzsweeps von PBS, die über einen Frequenzbereich von 500 bis 0,5 rad/s bei 130°C mit einer Dehnung von 0,5 % durchgeführt wurden, während Teilabbildung b) die van-Gurp-Palmen-Auftragung zeigt.

In Beispiel 2 hat demzufolge eine unkontrollierte, eigeninduzierte Verzweigungsreaktion stattgefunden. Noch deutlicher ist dieser Befund in der sogenannten van Gurp-Palmen-Auftragung zu erkennen, die in Fig. 1b dargestellt ist. Lineare Polymere, wie beispielsweise die Laborprobe aus Beispiel 1, weisen bei dieser Auftragung eine Krümmung auf, während verzweigte Polymere von diesem Verhalten stark abweichen, wie für Beispiel 2 klar zu erkennen ist. Zum Vergleich sind die Ergebnisse einer kommerziellen Probe gezeigt, die gemäß der Patentschriften US7985566B2 bzw. US8318893B2 ebenfalls verzweigt ist und von der linearen Laborprobe ebenfalls abweicht. Führt man die Schmelzepolykondensation von Bernsteinsäure und 1,4-Butandiol in Gegenwart eines Antioxidans wie AO-1 durch, womit der oben vorgestellte Fall II vorliegt, erhält man ein Polymer, dass gemäß der Auftragung 1b eine Krümmung und demnach eine lineare Kettenstruktur aufweist (siehe Ausführungsbeispiel 3). Die unkontrollierte Verzweigungsreaktion wurde unterbunden. Dagegen führt die Schmelzepoly-kondensation mit AO-3 gemäß Fall III zu einer verzweigten Kettenstruktur, wie die rheologischen Untersuchungen in Fig. 1 belegen (Ausführungsbeispiel 6). AO-3 unterbindet zwar die unkontrollierte, eigeninduzierte Verzweigungsreaktion, wirkt jedoch selbst durch 4 umesterungsfähige Gruppen als Verzweigungsreagenz. Der Unterschied besteht jedoch darin, dass mit AO-3 kontrollierte Verzweigungen eingeführt werden, während die eigeninduzierte Verzweigungsreaktion gemäß Beispiel 2 unkontrolliert ist. Die Verwendung von AO-2 gemäß Fall I liefert ebenfalls eine lineare Kettenstruktur (Beispiel 4), wie zuvor für Beispiel 3 beschrieben. Jedoch ist die Molmasse niedriger, da AO-2 den Molmassenaufbau limitiert. Vorteilhaft ist hierbei, dass einerseits die unkontrollierte, eigeninduzierte Verzweigungsreaktion unterbunden wird; andererseits kann durch Steuerung der AO-2-Menge die Molmasse eingestellt werden, wie mit Ausführungsbeispiel 5 belegt wird.

Die Zugabe des Additivs kann in Form eines Pulvers, eines Granulats, eines Kompaktats als Schmelze, Flüssigkeit, Lösung, Suspension oder Emulsion erfolgen, bevorzugt ist die Zugabe als staubfreies oder staubarmes Granulat oder Kompaktat oder als Schmelze. Ebenso ist möglich Mischungen von mehreren Additiven zu verwenden.

## Patentansprüche

1. Verfahren zur Herstellung eines aliphatischen Polyesters, bei dem in einem ersten Schritt (Veresterung) mindestens ein aliphatisches Diol mit mindestens einer aliphatischen Dicarbonsäure zu einem Präpolymeren umgesetzt und das Präpolymere in einem zweiten Schritt anschließend einer Polykondensation unterworfen wird, **dadurch gekennzeichnet, dass** der erste und/oder zweite Schritt in Gegenwart mindestens eines phenolischen Antioxidans durchgeführt wird.

2. Verfahren nach Anspruch 1, **dadurch gekennzeichnet, dass** das phenolische Antioxidans
i) genau eine
ii) genau zwei oder keine
iii) mindestens 3
umesterungsfähige Gruppen aufweist.

3. Verfahren nach einem der vorhergehenden Ansprüche, **dadurch gekennzeichnet, dass** das mindestens eine phenolische Antioxidans mindestens eine der nachfolgenden Gruppen beinhaltet 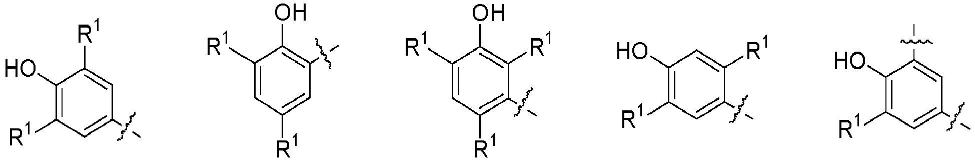 wobei R¹ bei jedem Auftreten gleich oder verschieden ist und ausgewählt ist aus der Gruppe bestehend aus linearen oder verzweigten Alkylresten mit 1 bis 8 Kohlenstoffatomen, insbesondere tert-Butyl oder Methyl; oder Wasserstoff, wobei mindestens eine Gruppe R¹ verschieden von Wasserstoff ist.

4. Verfahren nach einem der vorhergehenden Ansprüche, **dadurch gekennzeichnet, dass** das mindestens eine phenolische Antioxidans ein phenolisches Antioxidans mit genau einer umesterungsfähigen Gruppe ist und insbesondere ausgewählt ist aus der Gruppe bestehend aus Verbindungen oder Mischungen mehrerer Verbindungen gemäß allgemeiner Formel I, II und III
a) 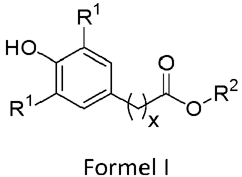 wobei
R¹ wie voranstehend definiert ist,
x 0, 1, 2, 3 oder 4, vorzugsweise 0 oder 2 ist, und
R² ausgewählt aus der Gruppe bestehend aus linearen oder verzweigten aliphatischen Resten mit 1 bis 36 Kohlenstoffatomen, oder teilaromatischen Resten, insbesondere gemäß nachfolgender allgemeiner Formel Ia 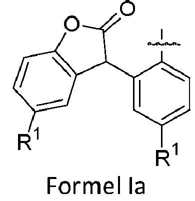
wobei R¹ die oben angegebene Bedeutung aufweist,
b) 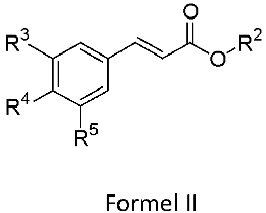 wobei
R³, R⁴ und R⁵ jeweils unabhängig voneinander ausgewählt sind aus der Gruppe bestehend aus Hydroxy, linearen oder verzweigten Alkoxygruppen mit 1 bis 6 Kohlenstoffatomen und Wasserstoff, mit der Maßgabe, dass mindestens einer der Reste R¹, R² und R³ ein Hydroxyrest und/oder eine lineare oder verzweigte Alkoxygruppe mit 1 bis 6 Kohlenstoffatomen ist, und
R² die zuvor angegebene Bedeutung hat, sowie
c) 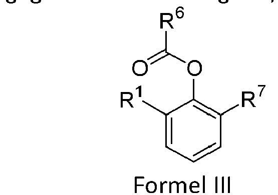
R¹ bei jedem Auftreten gleich oder verschieden ist und ausgewählt ist aus der Gruppe bestehend aus linearen oder verzweigten Alkylresten mit 1 bis 8 Kohlenstoffatomen, insbesondere tert-Butyl oder Methyl; oder Wasserstoff,
R⁶ ausgewählt ist aus der Gruppe bestehend aus ungesättigten Resten, insbesondere -CH=CH₂ oder -(Me)C=CH₂ sowie linearen oder verzweigten Alkylresten mit 1 bis 8 Kohlenstoffatomen,
R⁷ ausgewählt ist aus der Gruppe bestehend aus Resten R¹ oder Resten der allgemeinen Formel Illa 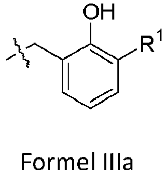
wobei R¹ die zuvor angegebene Bedeutung aufweist.

5. Verfahren nach vorhergehendem Anspruch, **dadurch gekennzeichnet, dass** das mindestens eine phenolische Antioxidans gemäß allgemeiner Formel II ausgewählt ist aus der Gruppe bestehend aus den nachfolgenden Verbindungen, 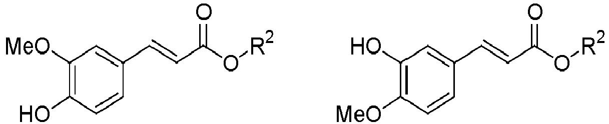 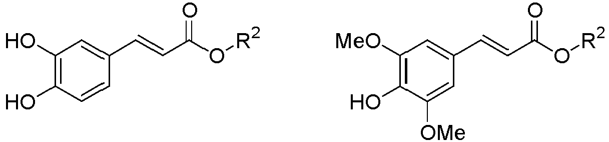 wobei R² die zuvor angegebene Bedeutung hat.

6. Verfahren nach einem der vorhergehenden Ansprüche, **dadurch gekennzeichnet, dass** das mindestens eine phenolische Antioxidans ausgewählt ist aus der Gruppe bestehend aus phenolischen Antioxidantien mit genau zwei umesterungsfähigen Gruppen und insbesondere ausgewählt ist aus der Gruppe bestehend aus Verbindungen oder Mischungen mehrerer Verbindungen gemäß allgemeiner Formel IV 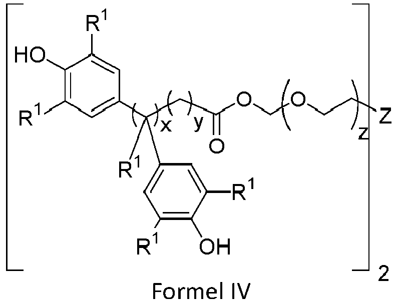 wobei
R¹ die zuvor angegebene Bedeutung hat,
Z eine chemische Bindung, Schwefel oder Sauerstoff ist,
x 0 oder 1 ist,
y 0, 1, 2, 3 oder 4 und
z 0 oder 1 bis 12 ist.

7. Verfahren nach einem der vorhergehenden Ansprüche, **dadurch gekennzeichnet, dass** das mindestens eine phenolische Antioxidans ausgewählt ist aus der Gruppe bestehend aus phenolischen Antioxidantien ohne umesterungsfähige Gruppe und insbesondere ausgewählt ist aus der Gruppe bestehend aus Verbindungen oder Mischungen mehrerer Verbindungen, die einen der nachfolgenden Reste aufweisen 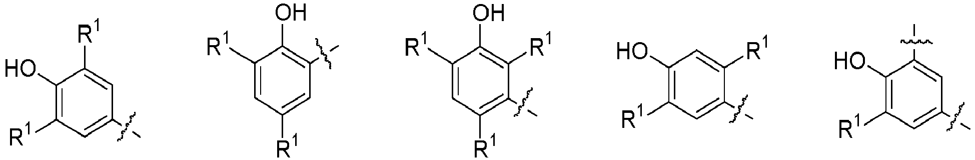 insbesondere ausgewählt ist aus der Gruppe bestehend aus den nachfolgenden Verbindungen 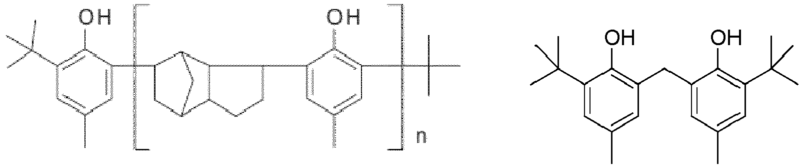 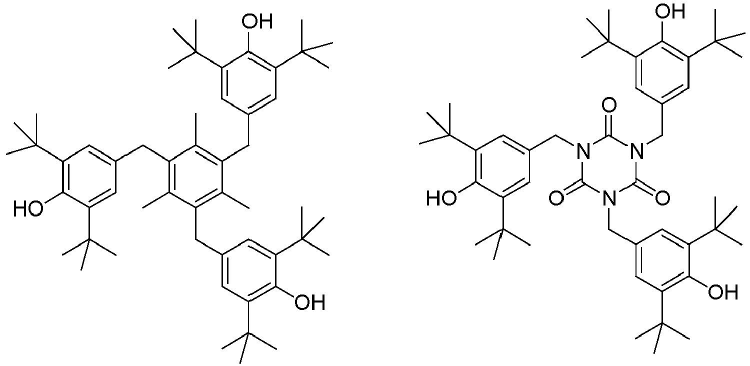 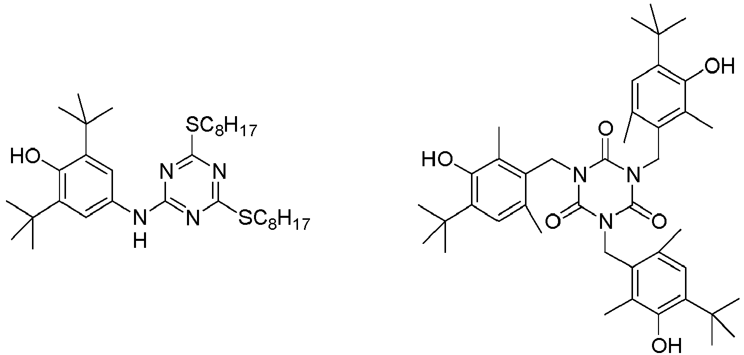 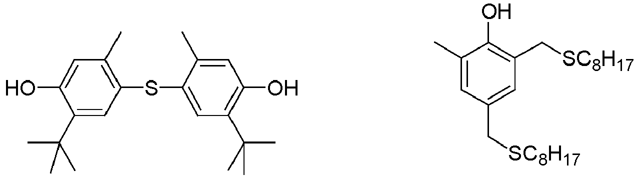 wobei n 1 bis 10 bedeutet.

8. Verfahren nach einem der vorhergehenden Ansprüche, **dadurch gekennzeichnet, dass** das mindestens eine phenolische Antioxidans ein phenolisches Antioxidans mit mindestens drei umesterungsfähigen Gruppen ist und insbesondere ausgewählt ist aus der Gruppe bestehend aus Verbindungen oder Mischungen mehrerer Verbindungen gemäß allgemeiner Formel V 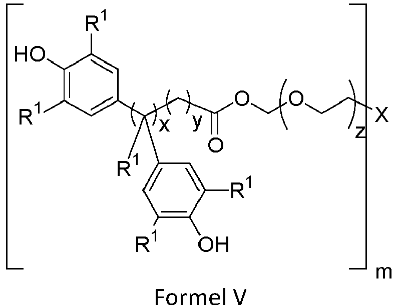 wobei R¹, x, y und z wie in Anspruch 5 definiert sind und
m 4 oder 3 ist, und
X für m = 4 ein Kohlenstoffatom ist und für m = 4 ausgewählt ist aus der Gruppe bestehend aus CH und CR¹, wobei R¹ wie voranstehend definiert ist.

9. Verfahren nach vorhergehendem Anspruch, **dadurch gekennzeichnet, dass** das mindestens eine phenolische Antioxidans vier umesterungsfähige Gruppen aufweist und insbesondere die nachfolgende chemische Struktur aufweist

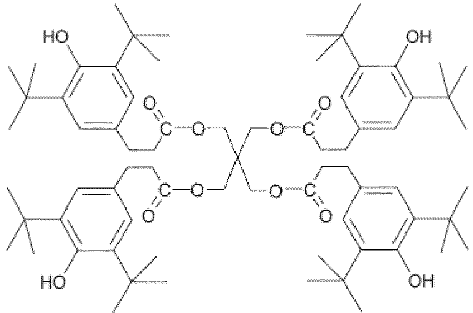

10. Verfahren nach einem der vorhergehenden Ansprüche, **dadurch gekennzeichnet, dass** die Gesamtheit des mindestens einen phenolischen Antioxidans, bezogen auf die Gesamtheit aus dem mindestens einen aliphatischen Diol und der mindestens einen aliphatischen Dicarbonsäure, in einem Gewichtsverhältnis von 0,01 bis 5,0 Gew.-%, bevorzugt von 0,05 bis 2,0 Gew.-%, besonders bevorzugt von 0,10 bis 1,0 Gew.-% eingesetzt wird.

11. Verfahren nach einem der vorhergehenden Ansprüche, **dadurch gekennzeichnet, dass** das mindestens eine phenolischen Antioxidans in Form eines Pulvers, eines Granulats, eines Kompaktats, als Schmelze, Flüssigkeit, Lösung, Suspension oder Emulsion, bevorzugt als Pulver, Granulat oder Kompaktat oder als Schmelze, erfolgt.

12. Verfahren nach einem der vorhergehenden Ansprüche, **dadurch gekennzeichnet, dass** das mindestens eine aliphatische Diol ausgewählt ist aus der Gruppe bestehend aus linearen oder verzweigten aliphatischen Diolen mit 2 bis 18 Kohlenstoffatomen, insbesondere Ethylenglycol, 1,2-Propandiol, 1,3-Propandiol, 1,4-Butandiol, 1,5-Pentandiol, 1,6-Hexandiol, 1,8-Octandiol, 1,12-Dodecandiol1,16-Hexadekandiol, Neopentylglycol, und 1,4-Cyclohexandimethanol sowie cycloaliphatischen Diolen, wie z.B. 1,4-Cyclohexandiol oder 1,3-Cyclohexandiol sowie Mischungen und Kombinationen hiervon.

13. Verfahren nach einem der vorhergehenden Ansprüche, **dadurch gekennzeichnet, dass** die mindestens eine aliphatische Dicarbonsäure ausgewählt ist aus der Gruppe bestehend linearen aliphatischen Dicarbonsäuren mit 2 bis 36 Kohlenstoffatomen, insbesondere Bernsteinsäure, Malonsäure, Glutarsäure, Adipinsäure, Pimelinsäure, Suberinsäure, Azelainsäure, Sebacinsäure, Brassylsäure, Thapsiasäure; Dimerfettsäuren sowie cycloaliphatische Dicarbonsäuren, wie z.B. 1,3-Cyclohexandicarbonsäure oder 1,4-Cyclohexandicarbonsäure sowie Mischungen und Kombinationen hiervon.

14. Verfahren nach einem der vorhergehenden Ansprüche, **dadurch gekennzeichnet, dass** ein Teil, bevorzugt maximal 20 mol-% der mindestens einen aliphatischen Dicarbonsäure ersetzt ist durch eine nichtaliphatische Dicarbonsäure, bzw. Terephthalsäure, Isophthalsäure oder eine alpha,omega-Hydroxycarbonsäuren wie z.B. Milchsäure, Hydroxybuttersäure oder Hydroxyvaleriansäure und/oder ein Teil, bevorzugt maximal 20 mol-% des mindestens einen aliphatischen Diols ersetzt ist durch einen nicht-aliphatischen Diol, wie z.B. Hydrochinon und/oder Resorcin.

15. Verfahren nach einem der vorhergehenden Ansprüche, **dadurch gekennzeichnet, dass** es kontinuierlich durchgeführt wird, wobei bevorzugt der erste Schritt bei einer Temperatur von 160 bis 190 °C, weiter bevorzugt von 165°C bis 180°C und der zweite Schritt bei einer Temperatur von 220 bis 250 °C, weiter bevorzugt von 225 bis 235 °C durchgeführt wird.

16. Verfahren nach einem der vorhergehenden Ansprüche, **dadurch gekennzeichnet, dass** es diskontinuierlich durchgeführt wird, wobei bevorzugt der erste Schritt mit einer Temperaturrampe von 145°C bis 185°C, und der zweite Schritt mit einer Temperaturrampe von 185°C bis 250°C, bevorzugt bis 235°C durchgeführt wird.

17. Verfahren nach einem der vorhergehenden Ansprüche, **dadurch gekennzeichnet, dass** erster und/oder zweiter Schritt in Anwesenheit mindestens eines Umesterungskatalysators durchgeführt wird, wobei vorzugsweise der mindestens eine Umesterungskatalysator ausgewählt ist aus der Gruppe bestehend aus Metallverbindungen, die die Metalle Li, Mg, Ca, Ba. La, Ce, Ti, Zr, f, V, Mn, Fe, Co, Ir, Ni, Zn, Ge und/oder Sn enthalten, insbesondere Metallalkoxide, Metallkomplexe oder anorganische Metallverbindungen wie Oxide, Hydroxide, Carbonate, Phosphate, Sulfate, Nitrate und Chloride umfassen der zuvor genannten Metalle.
